# EUROPEAN PATENT SPECIFICATION

(11) **EP 1 889 420 B1**
(45) Date of publication and mention of the grant of the patent: **27.02.2013**
(21) Application number: 06772594.5
(22) Date of filing: 08.06.2006
(51) Int. Cl.: H04W 88/08

(54) **PROVIDING WIRELESS COVERAGE INTO SUBSTANTIALLY CLOSED ENVIRONMENTS**
BEREITSTELLUNG VON DRAHTLOSER ABDECKUNG IN IM WESENTLICHEN GESCHLOSSENEN UMGEBUNGEN
COUVERTURE SANS FIL POUR ENVIRONNEMENTS SENSIBLEMENT FERMES

(30) Priority: 10.06.2005 US 150820
(43) Date of publication of application: 20.02.2008
(73) Proprietor: ADC Telecommunications, Inc, Eden Prairie, MN 55344-2252 (US)
(72) Inventor: FISCHER, Larry, G., Waseca, Minnesota 56093 (US)
(74) Representative: Beresford, Keith Denis Lewis
(86) International application number: PCT/US2006/022342
(87) International publication number: WO 2006/135697

(56) References cited:
- WO-A-01/82642
- WO-A-94/13067
- WO-A2-03/079645

## Description

### Background

In recent years, the telecommunications industry has experienced rapid growth by offering a variety of new and improved services to customers. This growth has been particularly notable in the area of wireless communications, e.g., cellular, personal communication services (PCS) and other mobile radio systems. One of the factors that has led to the rapid growth in the wireless arena is the objective of allowing a user to be reached any time, and anywhere. Unfortunately, the industry has not been able to reach this goal even though large and small companies and various consortiums are frantically building vast networks in an effort to capture a share of this booming market.

Despite their efforts to provide seamless and blanket coverage for wireless telecommunications, areas of limited wireless coverage still exist in heavily populated regions. One particular difficulty is communication within a substantially closed environment, such as a building or other structure which can interfere with radio frequency transmissions. In these situations, the structure itself acts as a barrier and significantly attenuates or reduces the signal strength of the radio waves to the point that transmission is virtually impossible at the frequency and power levels used in these systems.

The industry has developed a number of options to extend coverage into buildings and other substantially closed environments. For example, one solution to this problem has been to distribute antennas within the building. Typically, these antennas are connected to an RF signal source by dedicated coaxial cable, optical fiber, and, more recently, unshielded twisted pair wires. In such systems, various methods of signal conditioning and processing are used, ranging from straight bi-directional on-frequency amplification and band pass filtering to select which service or service provider to transport, to frequency conversion methods to move the signals to a more desirable segment of the frequency spectrum for transport. Some systems also use passive antenna methods and "leaky" coaxial cable to radiate signals within the desired area without any signal conditioning. Unfortunately, with the explosive growth in the wireless market, these solutions often are too limited in capacity to carry signals for the various services and service providers into the closed environment. Thus, the limited benefits of such systems, at times, can be outweighed by the costs associated with the installalion and maintenance of the systems.

For the reasons stated above, and for other reasons stated below which will become apparent to those skilled in the art upon reading, and understanding the present specification, there is a need in the art for an economically viable system and method for distributing wireless signals in a substantially closed environment.

WO01/82642A discloses using slave units comprising transceivers installed within a building to receive RF signals from a mobile telephone. The slave units downconvert received RF signals to IF signals which are transmitted from the building via cable and then the RF signal recovered at a transceiver.

WO94/13067A discloses a repeater system communicating between a base station of a mobile cellular network and a mobile unit in an environment closed off the high frequency communication with the base station. The repeater system comprises two way frequency converters allowing converted low frequency signals to be transmitted hy cable.

WO03/079645A discloses a system using remote antenna units to provide wireless coverage throughout a building complex, the remote antenna units being coupled to a host unit which interfaces with a wireless network. Signals between the host unit and remote antenna units are transported as a digital representation of the telephony RF spectrum and telephony signals received at each of the remote antenna units arc summed together at the host unit for interface to the wireless network.

Aspects of the present invention are set out in the appended independent claims.

### Summery

Ambodiments of the present invention provide solutions to the problems identified above. In particular, embodiments of the present invention enable economical distribution of wireless signals in a substantially closed environment.

In one embodiment, a communication system is provide. The communication system includes a master host unit that is adapted to communicate analog signal with a plurality of service provider interfaces and that is adapted to send and receive digitized spectrum over a plurality of communication links. The master host unit included circuitry for converting between analog signals and digitized spectrum. The communication system further comprises at least one remote server unit that is communicatively coupled to the master host unit over a digital communication medium. The at least one remote server unit is adapted to convert between analog signals and digitized spectrum and is adapted to amplify the analog signals. The communication system further includes a plurality of remote units that are each communicatively coupled to one of the at least one remote server units over an analog communication medium. Each of the plurality of remote units is adapted to transmit and receive wireless signals over a plurality of air interfaces for the associated service provider interfaces.

### Brief Description of the Drawings

Figure 1 is a block diagram of one embodiment of a system for providing wireless coverage into a substantially enclosed environment.
Figure 2 is a block diagram of one embodiment of a master host unit for the system of Figure 1.
Figure 3 is a block diagram of one embodiment of a master expansion unit for the system of Figure 1.
Figure 4 is a block diagram of one embodiment of remote server unit for the system of Figure 1.
Figure 5 is a block diagram of one embodiment of a remote unit of Figure 1.

### Detailed Description

In the following detailed description, reference is made to the accompanying drawings which form a part hereof, and in which is shown by way of illustration specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

### I. Introduction

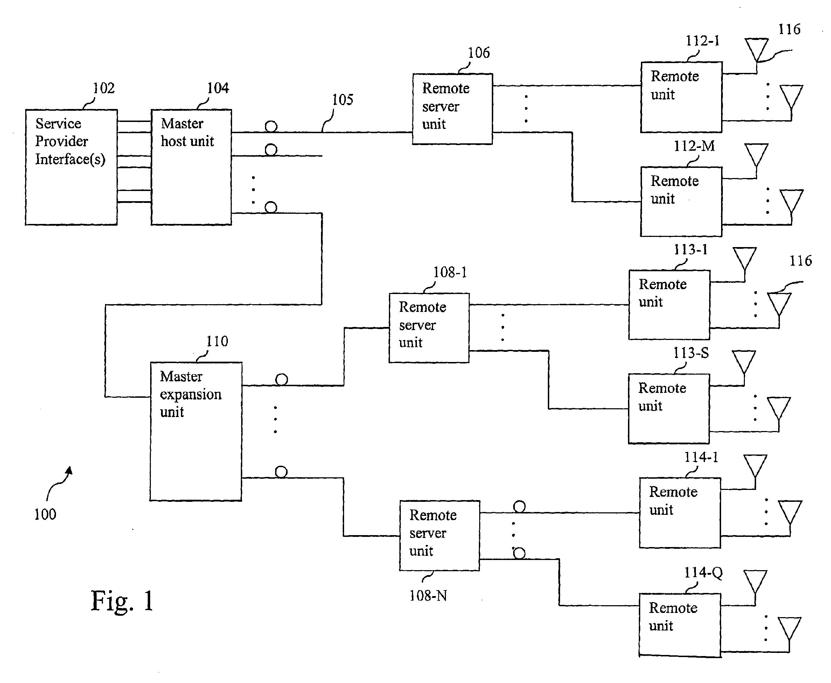

Embodiments of the present invention provide improved wireless coverage into substantially closed environment, e.g., in buildings or other structures. Section II below provides an overview of one embodiment of a network topology shown in Figure 1 for extending wireless coverage into substantially closed environments according to the teachings of the present invention. In this embodiment, wireless coverage for multiple service providers is carried into one or more structures over a transport network. The transport network includes two main components: a digital transport component and an analog transport component. First, the digital component transports signals as digitized spectrum over, e.g., a fiber optic cable, free space optics, high speed copper, millimeter wave radio link, or other appropriate wired or wireless link for carrying the digital representation of the wireless spectrum. The digital component transports the signals between a service provider interface, e.g., a base station transceiver, a repeater, or other interface to a service provider network, and one or more buildings or other structures that adversely effect the transmission of wireless communication signals. Second, the analog component uses analog transmission, e.g., analog transmission over coax or fiber optic cable, to carry signals to and from antennas placed throughout the coverage area within the structure. In some embodiments, up or down conversion is used to move the signals to a portion of the spectrum to provide improved transmission characteristics, e.g., lower frequency for longer transmission distance.

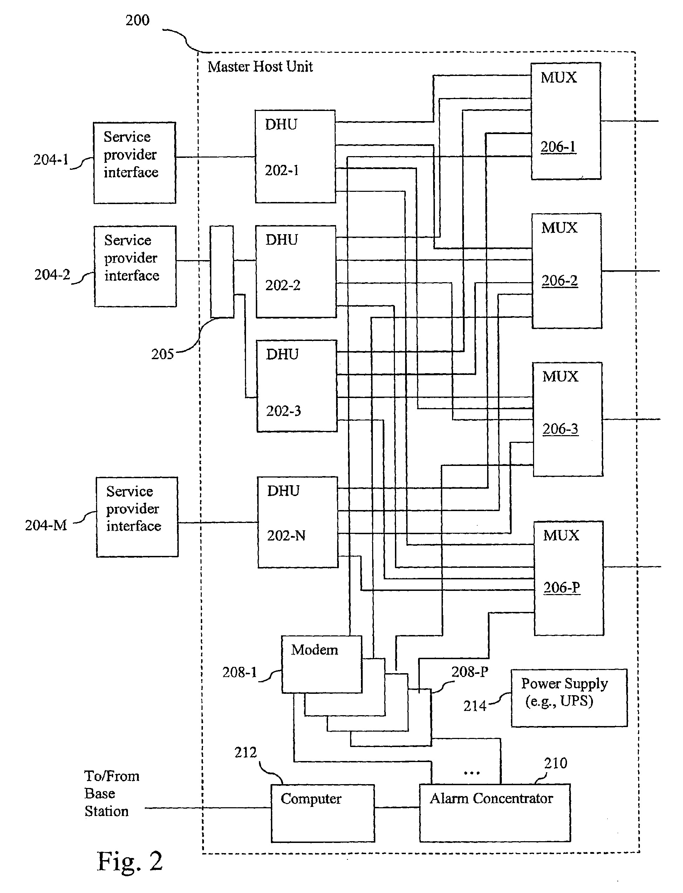

The remainder of the detailed description describe an example implementation of the network topology to extend the coverage of the full 1.9 GHz PCS band and the 800 MHz cellular band into a plurality of buildings as shown in Figures 2-5. It is understood that this embodiment is provided by way of example and not by way of limitation. The network topology described in this application is used in other embodiments to carry these and other wireless services into various environments that limit the penetration of standard wireless transmissions.

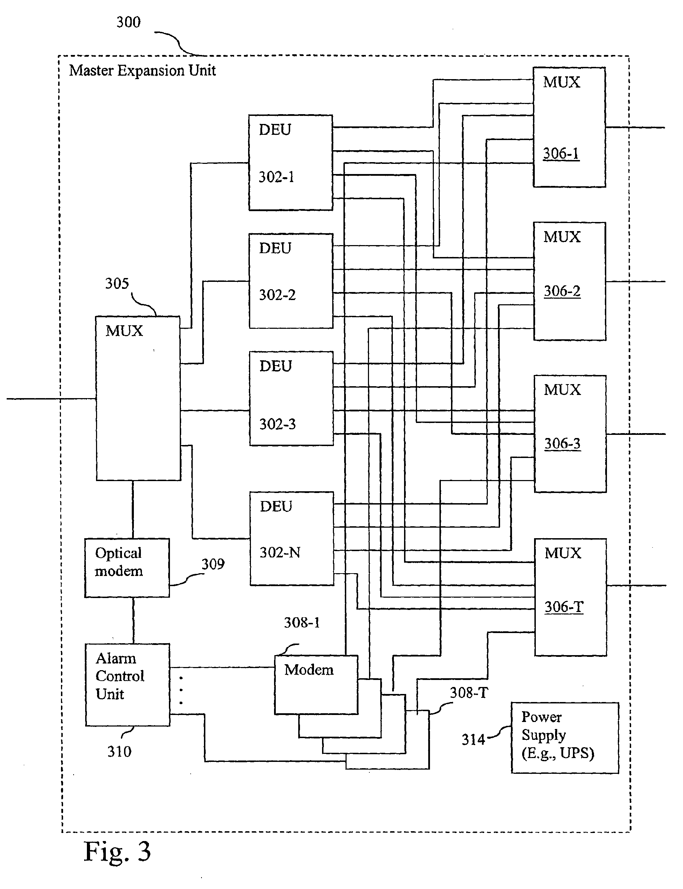

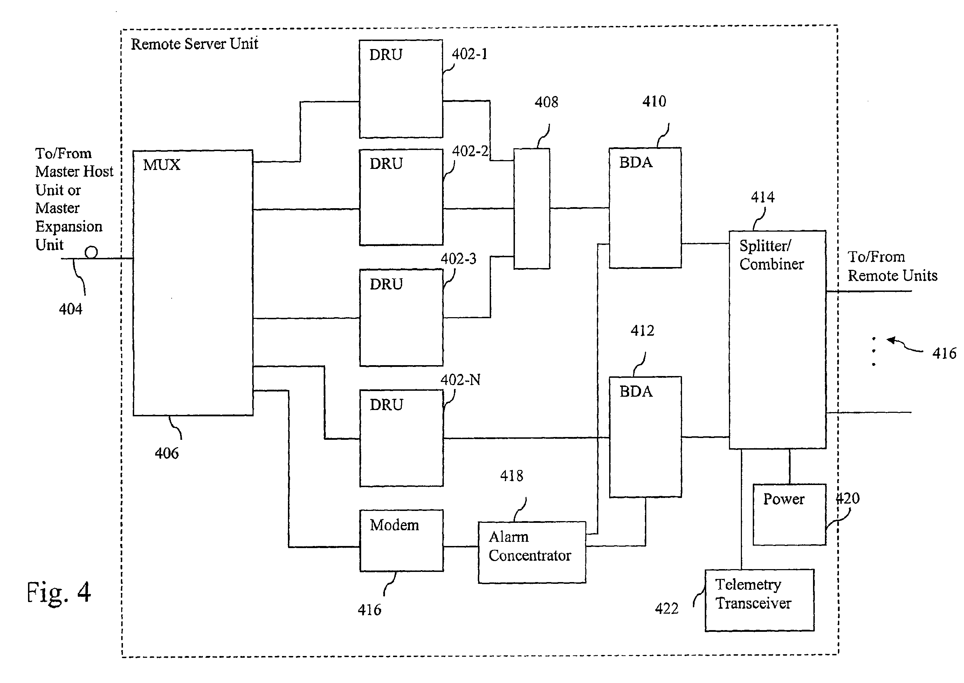

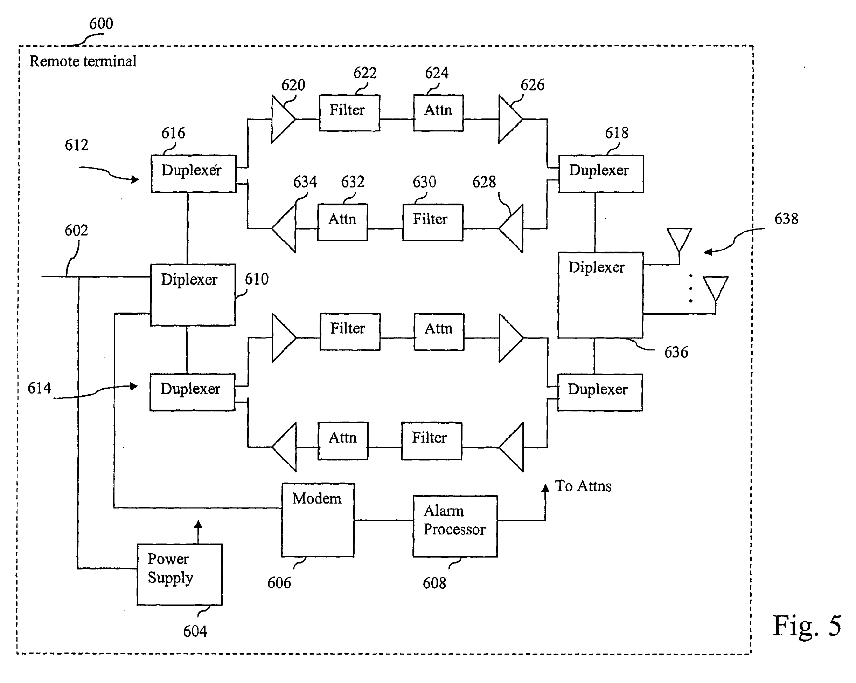

The example implementation shown in Figures 2-5 is described in detail below. Section III describes an embodiment of the master host unit of Figure 2, Section IV describes an embodiment of the master expansion unit of Figure 3. Section V describes an embodiment of the remote server unit shown in Figure 4. Section VI describes an embodiment of a remote unit shown in Figure 5.

### II. Network Topology

Figure 1 is a block diagram of one embodiment of a system, indicated generally at 100, for providing wireless coverage into a substantially enclosed environment. System 100 transports wireless signals for a plurality of services offered by one or more service providers and extends the coverage of these systems into one or more substantially enclosed environments, e.g., buildings or orher structures. At one end of its transport architecture, system. 100 includes service provider interface 102. Service provider interface 102 comprises, for example, an interface to one or more of a base transceiver station (BTS), a repeater, a bi-directional amplifier, a base station hotel or other appropriate interface for one or more service provider networks. In une embodiment, service provider interface 102 provides an interface to a plurality of services from one or more service providers, e.g., 800 MHz cellular service, 1,9 GHz personal communication services (PCS), Specialized Mobile Radio (SMR) services, two way paging services, vide services or other appropriate communication service.

System 100 uses two main transport protocols to extend the coverage of the wireless services into the substantially enclosed environment. First, system 100 uses digital transport over an appropriate communication medium 105, e.g., optical fiber. Communication medium 105 is represented as optical fiber in Figure 1 by way of example and not by way of limitation. In other embodiments, communication medium 105 comprises free space optics, high speed copper or other appropriate wired, wireless or optical communication medium. Advantageously, the use of this digital transport technology enables transport of the wireless signals over a significant distance. Thus, system 100 may extend coverage for wireless services to buildings located at a significant distance from the interface to the service provider's network. Second, system 100 extends the reach of the digital transport into the substantially enclosed environment with a plurality of analog transport links to a plurality of remote antennas.

System 100 uses the digital transport technology for communication between master host unit 104 and remote server units 106, and 108-1 to 108. In one embodiment, master host unit 104 includes a plurality of ports to subtend remote server units. By way of example and not by way of limitation, master host unit 104, in one embodiment, includes up to six ports for subtending remote server units. In a practical application, the number of ports that can be implemented in a master host unit 104 is primarily limited by the noise in the system. As shown in the example of Figure 1, the number of remote server units associated with a port of master host unit 104 is increased by interposing a master expansion unit 110 between the port of master host unit 104 and the remote server units 108-1 to 108-N- The master expansion unit 110 digitally splits and sums the signals transported between the mater host unit 101 and the remote server units 106 and 108-1 to 108-N. In one embodiment, the master expansion unit 110 is adapted to support up to 4 remote server units. Again, the actual number of ports in a master expansion unit 110 is determined based on the needs of a given system and is primarily limited by the noise level in the system.

Master host unit 104 and remote server units 106, and 108-1 to 108-N convert between analog signals, e.g., analog RF signals, and digitized spectrum. In one embodiment, master host unit 104 includes a bank of individual circuit, such as a bank of Digivance^{™} Digital Host Units (DHUs) or FLX host unit commercially available from ADC Telecommunications, Inc. of Eden Prairie, MN, that are each configured to operate on a selected portion of the wireless spectrum. In one embodiment, the DHUs convert between 25 MHz bands of wireless spectrum and digitized samples of the spectrum in the form of 20 bit words. Similarly, remote server units 106 and 108-1 to 108-N, in one embodiment, use a bank of Digivante^{™} Digital Remote Units (DRUs) or FLUX remote units, also available from ADC Telecommunications, Inc. to operate on the selected spectrum. In one embodiment, course wave division multiplexing (CWDM) or dense wave division multiplexing (DWDM) are used to aggregate the signals for the various services Onto a single fiber between the master host unit 104 and each or the remote server units 106, and 108-1 to 108-N. In one embodiment, master expansion unit 110 also includes a banks of individual expansion circuits such as a bank of Digivance™ Digital Expansion Units (DEUs) commercially available from ADC Telecommunications, Inc.

The analog portion of system 100 provides communication between the remote server units 106 and 108-10 108-N and their respective remote units 112-1 to 112-M, 113-1 to 113-S and 114-1 tao 114-Q. The analog portion of system 100 uses one or more of various communication media, e.g., coaxial cable, tiber optic cable or the like, to carry the signals in their native analog frequency spectrum, e.g., their assigned RF spectrum. In other embodiments, the signals are moved to other frequency spectrum for improved transport, e.g., up or down converted. In one embodiment, remote server unit 106 is coupled to remote units 117.-1 to 112-M over coaxial cable. In another example, signals from remote server unit 108-N are provided to remote units 114-1 to 114.Q over optical fiber in analog format.

Each remote unit includes one or more antennas 116. In one embodiment, each remote unit supports up to four antennas, In other embodiments, other appropriate numbers of antennas are used.

In one embodiment, remote server units provide power to their respective remote units. For example, remote server unit 106 is coupled to remote units 112-1 to 112-M over coaxial cable. In this embodiment, remote server unit 106 injects power onto the coaxial cable fur the circuitry of remote units 112-I to 112-M. Further, remote units 112-I to 112-M are equipped with circuitry to extract power from the coaxial cable for the operation of remote units 112-1 to 112-M.

In one embodiment, remote server units provide a telemetry signal to their respective remote units. The telemetry signal is used to adjust the gain applied to signals at the various remote units for the various services supported in system 100. In one embodiment, the telemetry signal is communicated at to frequency between the spectrum for the various services, e.g., at a frequency of 1.4 to 1.6 GHz fur a system running 800 MHz cellular and 1.9 GHz PCS services.

In one embodiment, master host unit 104 and the remote server units all include modems for communicating and transporting signals for operations, administration and maintenance (O,A&M) functions such as alarms and the like.

The physical location of the various elements of system 100 varies based on the needs of a given implementation. For example, in some embodiments, the master host unit 104 is co-located with a base station or a base station hotel. In a system 100 that provides coverage into a number of buildings, one or more remote server terminals is provided, e.g., at a point of entry into each building. In other embodiments, a remote server terminal is located on each floor of the building. In yet other embodiments, a master expansion unit is provided at the point of entry into each building and a remote server unit is provided on each floor of the building. The exact location of each of the elements of system 100 is determined based on the specific layout and location of the area or areas to be covered by system 100. The example provided here are not meant to be exhaustive and thus are not intended to be read in a limiting sense.

In operation, system 100 extends the coverage of at least two wireless services into a substantially enclosed environment. System 100 receives signal for the services at service provider interface 102. Master host unit 104 receives the signals and converts the signals to digitized form. Master host unit 104 also aggregates the various services and passes these aggregated, digitized signals to a plurality of remote server units 106, and 108-1 to 108-N over a digital transport link. At each remote server unit, the signals for the two services are amplified and combined and transmitted over the analog link to a plurality of remote-units. In one embodiment, telemetry and power are injected into the combined signal and transmitted to the remote units- At the remote units, the gain of the signals for the services arc again adjusted, e.g., based on the telemetry signal, and transmitted over a plurality of antennas in various broadcast areas in the substantially enclosed environment.

Signals from wireless terminals, e.g., cell phones, are returned over system 100 in a similar fashion to the service provider interface 102.

### III. Master Host Unit

Figure 2 is a block diagram of one embodiment of a master host unit, indicated generally at 200, for the system 100 of Figure 1. Master host unit 200 is one end of a digital transport link in system 100 of Figure 1. In this embodiment, master host unit 200 is built around a plurality of circuits 202-1 to 202-N that convert signals between analog and digitized formats. In this example, the circuits 202-1 to 202-N comprise Digivance^{™} Digital Host Units or FLX host units commercially available from ADC Telecommunications. Other circuits that perform a similar conversion are used in other embodiments.

Master host unit 200 communicates with a plurality of service providers al service provider interfaces 204-1 to 204-M, e.g., interfaces to base transceiver stations, repeaters, bi-directional amplifiers, or the like. These communications are in the form of analog signals (also referred to herein as radio frequency (RF) signals). For purposes of this specification, the term "analoge signals" comprises signals in the frequency spectrum used to transport a wireless service, e.g., RF signals in the 800 MHz spectrum for cellular, RF signals in the 1.9 GHz spectrum for Personal Communication Services (PCS), and the like. These signals are referred to as analog signals even if the data for the service is in digital form, e.g., CDMA and TDMA signals, because the digital signals ride on an analog waveform. Advantageously, master host unit 200 enables the aggregation and transmission of a plurality of services to a plurality of buildings or other structures so as to extend the wireless coverage of multiple services into the structures on a single platform.

The interconnection of service provider interfaces 204-1 to 204-M and DHUs 202-1 to 202-N is configured based on the needs of a particular system. In some embodiments, multiple service providers interfaces 204-1 to 204-M are coupled to the same DHU 202-1 to 202-N by use of splitter/combiner circuits. In other embodiments, the same service provider interface 204-1 to 204-M is coupled to multiple DHUs 202-1 to 202-N. In one example, master host unit 200 enables the extension of both the 800 MHz cellular band and the 1.9 GHz PCS band into a plurality of buildings over a single platform. In this embodiment, master host unit 200 includes four DHUs 202-1 to 202-4. DHUs 202-1 to 202-3 are dedicated to handling the three segments of the PCS band and DHU 202-4 is dedicated to the 800 MHz band. Further, service provider interface 204-1 is a base transceiver station and is coupled to DHU 202-1 to provide the first segment of the 1.9 GHz band. Further, service provider interface 204-2 is also a base transceiver station and is coupled through splitter/combiner 205 to provide two PCS segments to DHUs 202-2 and 202-3. Finally, service provider interface 204-3 is a repeater and is coupled to provide 800 MHz service to DHU 202-4. The configuration shown in Figure 2 is provided by way of example and not by way of limitation. Other configurations to support other combinations of services and service providers are also supported by this architecture.

Each DHU 202-1 to 202-N is coupled to each of a plurality of multiplexer (MUX) circuits 206-1 to 206-P. The DHUs 202-1 to 202-N communicate digitized spectrum for their assigned band with MUX circuits 206-1 to 206-P. The number of MUX circuits 206-1 to 206-P, in one embodiment, is related to the number of ports available on the DHUs 202-1 to 202-N. In one embodiment, the DHUs provide six ports, and thus a maximum of six MUX circuits 206-1 to 206-P are provided. Each MUX circuit 206-1 to 206-P provides a port for communicating aggregated, digitized signals with a remote building or other substantially closed structure. In one embodiment, MUX circuits 206-1 to 206-P comprise optical multiplexer circuits built on course wave division multiplexing (CWDM) or dense wave division multiplexing (DWDM) technology. For example, in one embodiment, MUX circuits 206-1 to 206-P comprise OptEnet optical multiplexers commercially available from ADC Telecommunications, Inc. of Eden Prairie, MN. In one embodiment, MUX circuits 206-1 to 206-P comprise passive multiplexer modules. In yet other embodiments, MUX circuits 206-1 to 206-P comprise electrical multiplexer circuits.

Master host unit 200 also includes circuitry for providing an Operations, Administration and Maintenance (O, A & M) channel that provides, among other things, a mechanism for passing alarm information in system 100 of Figure 1. Master host unit 200 includes a bank of modems 208-1 to 208-P. In one embodiment, modems 208-1 to 208-P are optical moderns. In other embodiments, wireless or wired modems are used. Each modem 208-1 to 208-P is coupled to a corresponding MUX 206-1 to 206-P. The signals to and from modem 208-1 to 208-P ride on a separate optical carrier of the associated multiplexer circuit. Modems 208-1 to 208-P are coupled to alarm concentrator 210.

Master host unit 200 also includes a computer 212 that is coupled to alarm concentrator 210. In one embodiment, computer 212 runs a network management system for system 100 of Figure 1. In one embodiment, the computer 212 runs a network management program such as the StarGazer program commercially available from ABC telecommunications, Inc. of Eden Prairie, MN. The network management program running on computer 212 tracks to location and identification of the parts of system 100. For example, computer 212 assigns a name and an associated location to each part of system 100 at system set-up.

Alarm concentrator- 210 communicates and concentrates alarm messages and control messages for system 100. In one embodiment, alarm concentrator 210 receives and concentrates alarm massages from remote units 112-1 to 112-M, 113-1 to 113-S, and 114-I to 114-Q in system 100. These alarm messages, in one embodiment include an identification number for the remote unit and a status or alarm messages. In other embodiments, other appropriate alarm messages are provided such as messages reporting changes in the attenuation levels applied at a remote unit.

Power for master host unit 200 is provided through power supply 214, e.g., an uninterrupted power supply (UPS).

In operation, master host unit 200 communicates signals between a service provider interface and a number of remote buildings or structures. In the downstream direction, the master host unit 200 receives analog signals from service provider interfaces 204-1 to 204-M. These analog signals are digitized in DHUs 202-1 to 202-N. Each DHU 202-1 to 202-N provides its output to each of MUX circuits 206-1 to 206-P. The MUX circuits 206-1 to 206-P multiplex the signals on, for example, a plurality of optical carriers. Each MUX circuit 206-1 to 206-P provides its output to, for example, a digital optical cable to transport the aggregated, digitized signals to a plurality of buildings or other enclosed structures. In the upstream direction, the MUX circuits 206-1 to 206-P direct the appropriate digitized spectrum to the associated DHUs 202-1 to 202-N for conversion to analog signals for the associated service provider interface 204-1 to 204-M. Modems 208-1 to 208-P process alarm messages for their assigned MUX circuit 206-I to 206-P.

### IV. Master Expansion Unit

Figure 3 is a block diagram of one embodiment of a master expansion unit, indicated generally at 300, for the system 100 of Figure 1. Master host unit 300 enables point-to-multipoint communication in the digital transport link of system 100 by digitally splitting and summing signals transmitted between the master host unit and the remote server units. In this embodiment, master expansion unit 300 is built around a plurality of circuits 302-1 to 302-N that digitally split and sum wireless signals in digitized format. Each circuit 302-1 to 302-N is associated with a portion of the spectrum transported by the system. Each circuit 302-1 to 302-N digitally splits its assigned spectrum in the downstream so that the spectrum is provided to a plurality of remote server units. In the upstream, each circuit 302-1 to 302-N digitally sums signals from all of the remote server units for its assigned spectrum. In this example, the circuits 302-1 to 302-N comprise Digivance^{™} Digital Expansion Units commercially available from ADC Telecommunications. Other circuits that perform a similar digital splitting and summing are used in other embodiments.

Master expansion unit 300 communicates with a master host unit, e.g., master host unit 200 of Figure 2. These communications arc in the form of digitized spectrum for a plurality of services. In one embodiment, master expansion unit 300 is coupled to the master host unit over a fiber optic cable that carries the plurality of services as digitized spectrum with each service (digitized spectrum) associated with a different wavelength on the optical fiber. The number of services and the association of a service with a selected wavelength is determined based on the needs of a particular application. In one example, master expansion unit 300 is associated with a system that enables the extension of both the 800 MHz cellular band and the 1.9 GHz PCS band into a plurality of buildings over a single platform. In this embodiment, the master expansion unit 300 includes four DEUs 302-1 to 302-4. DEUs 302-1 to 302-3 are dedicated to handling the three segments of the PCS band and DEU 302-4 is dedicated to the 800 MHz band. Further, multiplexer (MUX) circuit 305 is coupled to DEUs 302-1 to 302-N to provide the appropriate digitized spectrum to and from each DEU. In one embodiment, MUX circuit 305 comprises an optical multiplexer circuit built on course wave division multiplexing (CWDM) or dense wave division multiplexing (DWDM) technology, using, e.g., an OptEnet optical multiplexer commercially available from ADC Telecommunications. In one embodiment, MUX circuit 305 comprises passive multiplexer modules. In yet other embodiments, MUX circuit 305 comprises electrical multiplexer circuits.

Each DEU 302-1 to 302-N is coupled to each of a plurality of multiplexer (MUX) circuits 306-1 to 306-T. The DEUs 302-1 to 302-N communicate digitized spectrum for their assigned band with MUX circuits 306-1 to 306-T. The number of MUX circuits 306-1 to 306-T, in one embodiment, is related to the number of ports available on the DEUs 302-1 to 302-N. In one embodiment, the DEUs provide six ports, and thus a maximum of six MUX circuits 306-1 to 306-T are provided. Each MUX circuit 306-1 to 306-T provides a port for communicating aggregated, digitized signals for all of the supported services with a remote building or other substantially closed structure. In one embodiment, MUX circuits 306-1 to 306-T comprise optical multiplexer circuits built on course wave division multiplexing (CWDM) or dense wave division multiplexing (DWDM) technology. For example, in one embodiment, MUX circuits 306-1 to 306-T comprise OptEnet optical multiplexers commercially available from ADC Telecommunications, Inc. of Eden Prairie, MN. In one embodiment, MUX circuits 306-1 to 306-T comprise passive multiplexer modules. In yet other embodiments, MUX circuits 306-1 to 306-T comprise electrical multiplexer circuits.

Master expansion unit 300 also includes circuitry for providing an Operations, Administration and Maintenance (O, A & M) channel that provides, among other things, a mechanism for passing alarm information in system 100 of Figure 1. Master expansion unit 300 includes a first modem 309 that is coupled to MUX circuit 306. Modem 309 is also coupled to alarm control unit 310. Alarm control unit 310 is also coupled to a bank of modems 308-1 to 308-T. In one embodiment, modems 308-1 to 308-T are optical modems. In other embodiments, moderns 308-1 to 308-T are wireless or wired modems. Each modem 308-1 to 308-T is coupled to a corresponding MUX 306-1 to 306-T. The signals to and from modem 308-1 to 308-T ride on a separate optical carrier of the associated multiplexer circuit to communicate alarm messages with the remote server units. Alarm control unit 310 passes alarm messages between the master host unit and the remote server units via modem 309 and modems 308-1 to 308-T.

Power for master expansion unit 300 is provided through power supply 314, e.g, uninterrupted power supply (UPS).

In operation, master expansion unit 300 communicates signals between a master host unit and a remote server unit in a communication system that extends wireless coverage into a plurality of buildings. In the downstream direction, the master expansion unit 300 receives digitized signals on a plurality of carriers at MUX 305 from a master host unit or another master expansion unit. The MUX circuit 305 separates the signals according to the various services and passes the signals to associated DEUs 302-1 to 302-N. These digitized signals are digitally split in DEUs 302-1 to 302-N. Each DEU 302-1 to 302-N provides its output to each of MUX circuits 306-1 to 306-T. The MUX circuits 306-1 to 306-P multiplex the signals from the DEUs 302-1 to 302-N on, for example, a plurality of optical carriers to provide an aggregated signal representing all of the digital wireless services. Each MUX circuit 306-1 to 306-T provides an output to, for example, a digital optical cable to transport the aggregated, digitized signals to a plurality of buildings or other enclosed structures.

In the upstream direction, the MUX circuits 306-1 to 306-T direct the appropriate digitized spectrum to the associated DEUs 302-1 to 302-N for digital summation. The DEUs 302-1 to 302-N provide the summed outputs for the digitized spectrum for the associated services to MUX circuit 306 for transmission to a master host or another master expansion unit.

Alarm control unit 310 and modems 309 and 308-1 to 308-P process alarm messages for the master expansion unit 300. Alarm control unit 310 receives messages from the remote units via the associated modems 308-1 to 308-T. Further, alarm control unit 310 passes alarms and other messages to selected remote units through their associated modem 308-1 to 308-T.

### V._Remote Server Unit

Figure 4 is a block diagram of one embodiment of remote server unit, indicated generally at 400, for the system 100 of Figure 1. Remote server unit 400 is the other end of the digital transport portion of the system 100 of Figure 1. In this embodiment, remote server unit 400 is built around a plurality of circuits 402-1 to 402-N that convert signals between analog and digitized formats. In this example, the circuits 402-1 to 402-N comprise Digivance^{™} Digital Remote Units (DRUs) or FLX remote units commercially available from ADC Telecommunications. In this embodiment, the circuits or DRUs 402-1 to 402-N convert signals between analog signals, such as the 800 MHz cellular band and the 1.9 GHz PCS band, and digitized samples in 20 bit words. Other circuits that perform a similar conversion are used in other embodiments.

Remote server unit 400 communicates with a master host unit, such as master host unit 200 of Figure 2, over a digitized communication link 404. In one embodiment, the communication link 404 carries the digitized spectrum for circuits 402-1 to 402-N on a plurality of multiplexed carriers, e.g., optical frequencies. Remote server unit 400 includes multiplexer (MUX) circuit 406 to mulitplex the signals for the plurality of circuits 402-1 to 402-N. In one embodiment, MUX circuit 406 comprises an optical multiplexer circuit built on course wave division multiplexing (CWDM) or dense wave division multiplexing (DWDM) technology-For example, in one embodiment, MUX circuit 406 comprises an OptEnet optimal multiplexer commercially available from ADC Telecommunications, Inc. of Eden Prairie, MN. MUX circuit 406 communicates digitized signals with DRUs 402-1 to 402-N by associating a particular carrier with each DRU 402-1 to 402-N.

As with the master host unit 200 of Figure 2, the remote server unit 400 is configurable based on the wireless services to be transported through the unit. Continuing the example from Figure 2, DRUs 402-1 to 402-3 are associated with three segments of the 1-9 GHz PCS band. Thus, the RF ports of the DRUs 402-1 to 402-3 arc coupled to splitter/combiner 408. Splitter/combiner 408 is further coupled to communicate the 1.9 MHz PCS analog spectrum to and from bidirectional amplifier 410. Further, DRU 402-4 is associated with the 800 MHz cellular service. The DRU 402-4 communicates the 800 MHz analog cellular spectrum to and from bidirectional amplifier 412. Bidirectional amplifiers 410 and 412 communicate their analog representations of their respective bands with splitter/combiner 414. Splitter/combiner 414 provides an interface 416 to a plurality of remote units such as remote units based on remote unit 600 of Figure 5. In one embodiment, interface 416 includes a plurality of ports, e.g., 4 or more ports. These ports communicate the combined analog spectrum of all services supported by the remote server unit 400 over an analog transport segment. In some embodiments, these ports are adapted for analog coaxial cable. In other embodiments, these ports are adapted for use with analog optical fiber. In some embodiments, the analog spectrum is moved to a different spectrum to provide improved communication over longer distances, e.g., downconverted to a lower spectrum for transmission on coaxial cable.

Remote server unit 400 also includes modem 416 and alarm concentrator 418 as part of an alarm mechanism for the communication system. In one embodiment, modem 416 is an optical modem. In other embodiments, modem 416 is a wireless or wired modem. Alarm concentrator 418 receives alarm and other messages from the remote units over interface 416. Alarm concentrator 418 passes these messages upstream through modem 416. In the downstream direction, messages for the remote units are received at modem 416 and provided to the appropriate remote unit through alarm concentrator 418.

Remote server unit 400 also includes a telemetry transceiver 422 coupled to splitter combiner 414. Telemetry transceiver 422 injects a signal into transmissions from the remote server unit 400 to the remote units. This signal is used by the remote units to adjust their attenuation levels based on the distance between the remote server unit 400 and the remote unit due to the affect of the length of a coaxial cable on the signal strength. In one embodiment, the telemetry signal is transmitted at frequency between the frequency ranges of the services transported over the system. For example, a telemetry signal with a frequency from 1.4 to 1.6 GHz is used when carrying both 800 MHz cellular service and 1.9 GHz PCS.

Power is also injected onto the signal at interface 416. Power is supplied via power supply 420. The power is injected onto each communication line extending from interface 416.

### VI. Remote Unit

Figure 5 is a block diagram of one embodiment of a remote unit, indicated generally at 600, for use in system 100 of Figure 1. Remote unit 600 is located at one end of an analog transport portion of the system of Figure 1 and is typically located within an enclosed environment. Typically, a particular implementation of a system 100 includes a plurality of remote units such as remote unit 600.

Remote unit 600 provides one or more air interfaces to wireless terminals for various service providers. Remote unit 600 communicates with a remote server unit, such as remote server unit 400 of Figure 4 at port 602. In one embodiment, port 602 is coupled to a coaxial cable and receives power and telemetry signals from the remote server unit. In other embodiments, the port 602 is coupled to a fiber optic cable and thus power is not included in the signal.

When the remote terminal is remotely powered from the remote server unit, port 602 is coupled to power supply 604. Power is extracted from the signal at port 602 and provided to power supply 604. Power supply 604 provides power for the rest of the circuitry in remote terminal 600.

Port 602 is also coupled to control carrier modem 606 to process the telemetry signal from the remote server unit. Modem 606 receives the telemetry signal from the remote server unit and passes the signal to alarm processor 608. Alarm processor 608 uses the information in the telemetry signal to determine the appropriate levels of attenuation for the various services supported by the remote terminal. The telemetry signal is used to compensate for differences in attenuation caused by different lengths of coaxial cable between the various remote units associated with a common remote server unit. In one embodiment, the remote terminal supports 800 MHz cellular service as well as the full 1.9GHz PCS band. The telemetry signal is received at a frequency of, for example, 1.4 to 1.6 GHz. Based on the level of the telemetry signal, alarm processor 608 sets the appropriate attenuation level for preceding the 300 MHz analog wireless signals and a separate attenuation level for processing 1.9 GHz analog wireless signals.

Port 602 also communicates analog signals to and from the remote server unit. In one embodiment, the analog signal includes both 800 MHz cellular service as well as the full 1.9GHz PCS band. Remote terminal 600 includes separate paths for processing the various services supposed. Port 602 is coupled to diplexer 610. Diplexer 610 splits and combines the signals for the various services supported by the remote terminal between a first path 612, e.g., for 800 MHz cellular, and a second path 614, e.g., for 1.9 MHz PCS.

First path 612 processes the 800 MHz signals both in the upstream and downstream directions. Duplexes 616 and 618 are located at either end of the first path 612 and separate the path into processing for the upstream signals and processing for the downstream signals. The downstream signals are processed by amplifier 620, filter 622, attenuator (Attn) 624 and amplifier 626 coupled in series between the duplexers 616 and 618. Filter 622 selects the appropriate downstream frequency band. Attenuator 624 attenuates the signal according to the level established by alarm processor 608. In the upstream direction, first path 612 includes amplifier 628, filter 630, attenuator (Attn) 632, and amplifier 634 coupled in series between duplexer 618 and duplexer 616. Filer 630 selects the upstream frequency band for the supported service and attenuator 632 provides the appropriate attenuation as set by alarm processor 608. Second path 614 operates in a similar manner and thus is not described further here.

The first and second paths 612 and 614 are coupled to diplexer 636. Diplexer 636 is also coupled to a plurality of antennas 638 over communication media, e.g., coaxial cable. In other embodiments, separate antennas are provided for each of paths 612 and 614.

In operation, remote unit 600 transmits and receives analog signals for at least two services. In the downstream direction, a signal is received at port 602. This signal includes, in one embodiment, analog signals in the 800 MHz band and in the 1.9GHz band as well as power and telemetry signals. The power is extracted by power supply 604 which powers the operation of the circuitry of the remote unit 600. The telemetry signal is also received and processed by modem 606 and alarm processor 608. Alarm processor 608 generates signals to control attenuation in paths 612 and 614.

Remote unit 600 also processes the combined analog signals. In the downstream direction, signals for the two services are separated in diplexer 610. The 800 MHz band is processed in path 612 and the 1.9 GHz band is processed in the 614 path. The signals are recombined in diplexer 636 and transmitted over the air interface at antennas 638. In the upstream direction, signals for the two services are received at the antennas 638 and separated at diplexer 636. Again, the 800 MHz band is processed in path 612 and the 1.9 GHz band is processed in the 614 path. The downstream signals are recombined at diplexer 610 for analog transport to the host remote server unit at port 602.

## Claims

1. A remote server unit (106) for communicating wireless signals in a substantially closed environment, comprising:
a multiplexer (406) coupled to a digital communication medium that transports digitized spectrum for a plurality of wireless services in a multiplexed format; **characterised by**:
a plurality of digital remote units (402), coupled to the multiplexer, each of the plurality of digital remote units configured to convert between the digitized spectrum and analog signals for the plurality of wireless services; and
at least one bi-directional amplifier (410) for selectively amplifying the analog signals for transmission over an analog communication medium to at least one of a plurality of remote units (112, 113, 114).

2. The remote server unit of claim 1, and further comprising a power circuit (420) adapted to inject power onto the analog communication medium.

3. The remote server unit of claim 1, and further including a telemetry transceiver (422) adapted to inject a telemetry signal onto the analog communication medium for transmission to the remote units for attenuation.

4. The remote server unit of claim 1, and further comprising a modem and an alarm concentrator, coupled between the multiplexer and the at least one bidirectional amplifier, for communicating alarm and other messages.

5. A communication system (100) for communicating wireless signals in a substantially closed environment and having at least one remote server unit (106) according to claim 1, the system comprising:
a master host unit (104, 200) that is adapted to communicate analog signals for the plurality of wireless services with a plurality of service provider, interfaces (102) and that is adapted to send and receive digitized spectrum for the plurality of wireless services over a plurality of communication links, the master host unit including circuitry (202-1 to 202-N) for converting between the analog signals and the digitized spectrum;
wherein the at least one remote server unit (106; 108-1, 108-N) is communicatively coupled to the master host unit over the digital communication medium (105), the at least one remote server unit being further adapted to communicate with the master host unit using the digitized spectrum; and
wherein the plurality of remote units (112, 114) are each communicatively coupled to one of the at least one remote server units over an analog communication medium using the analog signals, each of the plurality of remote units being adapted to transmit and receive wireless signals for the plurality of wireless services over a plurality of air interfaces for respective associated service provider interfaces.

6. The system of claim 5, wherein the circuitry of the master host unit for converting between analog signals and digitized spectrum comprises a plurality of host units (202) that each are adapted to operate on signals in a respective selected frequency band.

7. The system of claim 6, wherein the master host unit includes a multiplexer (206) coupled to each of the plurality of host units.

8. The system of claim 5, wherein the master host unit also includes a plurality of modems (208) for communicating alarm information between the master host unit and the remote units.

9. The system of claim 5, wherein the at least one remote server unit is adapted to inject power for the plurality of remote units.

10. The system of claim 5, wherein the at least one remote server unit includes a telemetry transceiver (422) that is adapted to be used by the remote units to adjust the attenuation/gain applied to signals in various frequency bands.

11. The system of claim 10, wherein the telemetry receiver communicates at a frequency between the frequency bands of at least two of the analog signals.

12. The system of claim 5, and further including a master expansion unit (110) interposed between the master host unit and at least two remote server units.

13. The system as claimed in claim 12 wherein the master expansion unit comprises:
a multiplexer (305) coupled to a communication medium that transports digitized spectrum for a plurality of services in a multiplexed format;
a plurality of digital expansion units (302), coupled to the multiplexer, each of the plurality'of digital expansion units configured to digitally split downstream signals and to digitally sum upstream signals for at least a portion of the digitized spectrum for one of the plurality of services; and
a plurality of multiplexer circuits (306), each multiplexer circuit coupled to an output of each of the plurality of digital expansion units to communicate the digitized spectrum for the plurality of services in a multiplexed format over a digital communication medium.

14. The system of claim 13, wherein the multiplexer and the plurality of multiplexers each comprise optical multiplexers.

15. The system of claim 13, wherein the master expansion unit further includes a circuit (308, 209, 310) for passing alarm and other messages.

16. The system of claim 15, wherein the circuit for passing alarm and other messages comprises:
an modem (309), coupled to the multiplexer circuit;
an alarm control unit (310), coupled to the modem; and
a plurality of modems (308), coupled to the alarm control unit, wherein the alarm control unit is adapted to pass messages through the modem and the plurality of modems.

17. The system of claim 5, wherein the digital communication medium comprises at least one of an optical cable, free space optics, millimeter wave radio link, wireless medium and high speed copper.

18. The system as claimed in claim 5 wherein the master host unit comprises:
a plurality of service provider interfaces (102, 204);
a plurality of digital host units (202), selectively coupled to the plurality of service provider interfaces, each digital host unit assigned to convert between analog and digitized spectrum; and
a plurality of multiplexers (206), each multiplexer coupled to the plurality of digital host units and providing an interface to a digital communication medium (104).

19. The system of claim 18, wherein the plurality of multiplexers comprises a plurality of one of optical and electrical multiplexers.

20. The system of claim 18, wherein the plurality of digital host units comprises:
a digital host unit coupled to a service provider interface for a first service; and
at least two additional host units coupled through a splitter/combiner to a service provider interface for a second service.

21. The system of claim 18, further including one or more splitter/combiners selectively coupled between the at least one service provider interface of the plurality of service provider interfaces and the plurality of digital host units.

22. The system of claim 18, further including a bank of modems (208), each modem coupled to one of the plurality of multiplexer circuits to carry alarm and other messages to remote units.

23. The system as claimed in claim 5 wherein each remote unit comprises;
a diplexer (610) coupled to an analog medium for receiving the analog signals for at least two services;
a first path (612), coupled to the diplexer, that processes signals for one of the at least two services;
a second path (614), coupled to the diplexer, that processes signals for another of the at least two services; and
a plurality of antennas (638) coupled to the first and second paths to provide the air interface for the remote unit.

24. The system of claim 23, wherein the plurality of antennas comprises a set of antennas (638) that are common to'the at least two services. -

25. The system of claim 23, wherein the plurality of antennas comprises a first set of antennas dedicated to one of the at least two services and a second set of antennas dedicated to another of the at least two services.

26. The system of claim 23, and further comprising a power supply that receives power over the analog medium.

27. The system of claim 23, and further comprising a modem (606) and alarm processor (608), coupled between the diplexer and the first and second paths, the alarm processor adapted to provide signals to control attenuators in the first and second paths based on a telemetry signal.

28. The remote server unit of claim 1, wherein the analog communication medium is coaxial cable or optical fiber.

29. The remote server unit of claim 1, wherein the remote server unit is further adapted to up or down frequency convert the analog signals.

30. The system of claim 5, wherein the analog communication medium is coaxial cable or optical fiber.

31. The system of claim 5, wherein the system is further adapted to up or down frequency convert the analog signals.

32. A method for communicating wireless signals in a substantially closed environment, the method comprising:
receiving digitized spectrum for a plurality of wireless services in a multiplexed format at a remote server unit;
converting between the digitized spectrum and analog signals for the plurality of wireless services at the remote server unit; and
transporting analog signals for the plurality of wireless services from the remote server unit to at least one of a plurality of remote units (112,113,114).

33. The method of claim 32, and further providing power from the remote server unit to the at least one of the plurality of remote units (112,113,114).

34. The method of claim 32, wherein transporting the analog signals for the at least one wireless services from the remote server unit to the at least one of the plurality of remote units (112, 113, 114) occurs across coaxial cable or optical fiber.

35. The method of claim 32, further comprising up or down converting the analog signals.

## Patentansprüche

1. Fernservereinheit (106) zur Kommunikation drahtloser Signale in einer im Wesentlichen geschlossenen Umgebung, umfassend:
einen Multiplexer (406), der mit einem digitalen Kommunikationsmedium verbunden ist, das in einem Multiplexformat ein digitalisiertes Spektrum für mehrere drahtlose Dienste transportiert, **gekennzeichnet durch**
mehrere digitale Ferneinheiten (402), die mit dem Multiplexer verbunden sind und jeweils eingerichtet sind, zwischen dem digitalisierten Spektrum und analogen Signalen für die drahtlosen Dienste zu wandeln, und
mindestens einen bidirektionalen Verstärker (410) zum selektiven Verstärken der analogen Signale zur Übertragung über ein analoges Kommunikationsmedium an mindestens eine von mehreren Ferneinheiten (112, 113, 114).

2. Fernservereinheit nach Anspruch 1 mit außerdem einer Energieschaltung (420), um in das analoge Kommunikationsmedium Energie einzuspeisen.

3. Fernservereinheit nach Anspruch 1 mit außerdem einem Telemetrie-Transceiver (422), um in das analoge Kommunikationsmedium ein Telemetriesignal zur Übertragung an die Ferneinheiten für eine Abschwächung einzuspeisen.

4. Fernservereinheit nach Anspruch 1 mit außerdem einem Modem und einem Warnkonzentrator, zwischengeschaltet zwischen den Multiplexer und den mindestens einen bidirektionalen Verstärker, um Warn- und andere Nachrichten zu kommunizieren.

5. Kommunikationssystem (100) zur Kommunikation drahtloser Signale in einer im Wesentlichen geschlossenen Umgebung, mit mindestens einer Fernservereinheit (106) nach Anspruch 1, wobei das System Folgendes umfasst:
eine Masterhosteinheit (104, 200), die zur Kommunikation analoger Signale für die drahtlosen Dienste mit mehreren Dienstanbieterschnittstellen (102) und zum Senden und Empfangen eines digitalisierten Spektrums für die drahtlosen Dienste über mehrere Kommunikationsverbindungen eingerichtet ist und eine Schaltung (202-1 bis 202-N) zum Wandeln zwischen den analogen Signalen und dem digitalisierten Spektrum enthält,
wobei die mindestens eine Fernservereinheit (106; 106-1, 106-N) zur Kommunikation mit der Masterhosteinheit über das digitale Kommunikationsmedium (105) verbunden ist und außerdem eingerichtet ist, unter Verwendung des digitalisierten Spektrums mit der Masterhosteinheit zu kommunizieren, und
wobei die Ferneinheiten (112, 114) jeweils mit einer der mindestens einen Fernservereinheiten über ein analoges Kommunikationsmedium unter Verwendung der analogen Signale zur Kommunikation verbunden sind und jeweils eingerichtet sind, drahtlose Signale für die drahtlosen Dienste über mehrere Ausstrahlungsschnittstellen für entsprechende zugeordnete Dienstanbieterschnittstellen auszusenden und zu empfangen.

6. System nach Anspruch 5, wobei die Schaltung der Masterhosteinheit zum Wandeln zwischen analogen Signalen und einem digitalisierten Spektrum mehrere Hosteinheiten (202) umfasst, die jeweils zum Verarbeiten von Signalen in einem entsprechenden ausgewählten Frequenzband eingerichtet sind.

7. System nach Anspruch 6, wobei die Masterhosteinheit einen Multiplexer (206) enthält, der mit den jeweiligen Hosteinheiten verbunden ist.

8. System nach Anspruch 5, wobei die Masterhosteinheit außerdem mehrere Modems (208) zur Kommunikation von Warninformationen zwischen der Masterhosteinheit und den Ferneinheiten enthält.

9. System nach Anspruch 5, wobei die mindestens eine Fernservereinheit eingerichtet ist, Energie für die Ferneinheiten einzuspeisen.

10. System nach Anspruch 5, wobei die mindestens eine Fernservereinheit einen Telemetrie-Transceiver (422) enthält, der zur Verwendung durch die Ferneinheiten eingerichtet ist, um die auf Signale in verschiedenen Frequenzbändern angewandte Abschwächung bzw. Verstärkung einzustellen.

11. System nach Anspruch 10, wobei der Telemetrie-Empfänger bei einer Frequenz zwischen den Frequenzbändern von mindestens zwei der analogen Signale kommuniziert.

12. System nach Anspruch 5 mit außerdem einer Mastererweiterungseinheit (110), die zwischen der Masterhosteinheit und mindestens zwei Fernservereinheiten eingefügt ist.

13. System nach Anspruch 12, wobei die Mastererweiterungseinheit Folgendes umfasst:
einen Multiplexer (305) der in einem Multiplexformat ein digitalisiertes Spektrum für mehrere Dienste transportiert,
mehrere digitale Erweiterungseinheiten (302), die mit dem Multiplexer verbunden sind und jeweils eingerichtet sind, für mindestens einen Teil des digitalisierten Spektrums für einen der Dienste abwärtsgerichtete Signale digital aufzuspalten und aufwärtsgerichtete Signale digital zu summieren, und
mehrere Multiplexerschaltungen (306), die jeweils mit einem Ausgang der jeweiligen digitalen Erweiterungseinheiten verbunden sind, um das digitalisierte Spektrum für die Dienste in einem Multiplexformat über ein digitales Kommunikationsmedium zu kommunizieren.

14. System nach Anspruch 13, wobei der Multiplexer und die mehreren Multiplexer jeweils optische Multiplexer aufweisen.

15. System nach Anspruch 13, wobei die Mastererweiterungseinheit außerdem eine Schaltung (308, 209, 310) zum Weiterleiten von Warn- und anderen Nachrichten enthält.

16. System nach Anspruch 15, wobei die Schaltung zum Weiterleiten von Warn- und anderen Nachrichten Folgendes umfasst:
ein Modem (309), das mit der Multiplexerschaltung verbunden ist,
eine Warnsteuereinheit (310) die mit dem Modem verbunden ist und
mehrere Modems (308), die mit der Warnsteuereinheit verbunden sind, wobei die Warnsteuereinheit eingerichtet ist, Nachrichten durch das Modem und die mehreren Modems weiterzuleiten.

17. System nach Anspruch 5, wobei das digitale Kommunikationsmedium eine optische Leitung, Optik durch den freien Raum, eine Millimeterwellen-Funkverbindung, ein drahtloses Medium und/oder eine Hochgeschwindigkeits-Kupferleitung umfasst.

18. System nach Anspruch 5, wobei die Masterhosteinheit Folgendes umfasst:
mehrere Dienstanbieterschnittstellen (102, 204),
mehrere digitale Hosteinheiten (202), die selektiv mit den Dienstanbieterschnittstellen verbunden sind und jeweils dem Wandeln zwischen einem analogen und einem digitalisierten Spektrum zugewiesen sind, und
mehrere Multiplexer (206), die jeweils mit den digitalen Hosteinheiten verbunden sind und eine Schnittstelle zu einem digitalen Kommunikationsmedium (104) zur Verfügung stellen.

19. System nach Anspruch 18, wobei die Multiplexer optische und/oder elektrische Multiplexer aufweisen.

20. System nach Anspruch 18, wobei die digitalen Hosteinheiten Folgendes umfassen:
eine digitale Hosteinheit, die mit einer Dienstanbieterschnittstelle für einen ersten Dienst verbunden ist, und
mindestens zwei zusätzliche Hosteinheiten, die über einen Splitter/Kombinator mit einer Dienstanbieterschnittstelle für einen zweiten Dienst verbunden sind.

21. System nach Anspruch 18 mit einem oder mehreren Splitter/Kombinatoren, die selektiv zwischen die mindestens eine Dienstanbieterschnittstelle der mehreren Dienstanbieterschnittstellen und die mehreren digitalen Hosteinheiten geschaltet sind.

22. System nach Anspruch 18 mit einer Modembank (208), aus der jedes Modem mit einer der Multiplexerschaltungen verbunden ist um Warn- und andere Nachrichten an Ferneinheiten zu übertragen.

23. System nach Anspruch 5, wobei jede Ferneinheit Folgendes umfasst:
einen mit einem analogen Medium. verbundenen Diplexer (610) zum Empfang der analogen Signale für mindestens zwei Dienste,
einen ersten Pfad (612), der mit dem Diplexer verbunden ist und Signale für einen der mindestens zwei Dienste verarbeitet,
einen zweiten Pfad (614), der mit dem Diplexer verbunden ist und Signale für einen anderen der mindestens zwei Dienste verarbeitet, und
mehrere Antennen (638), die mit dem ersten und den zweiten Pfad verbunden sind, um die Ausstrahlungsschnittstellen für die Ferneinheit bereitzustellen.

24. System nach Anspruch 23, wobei die Antennen einen Satz Antennen (638) umfassen, die den mindestens zwei Diensten gemeinsam sind.

25. System nach Anspruch 23, wobei die Antennen einen einem der mindestens zwei Dienste zugewiesenen ersten Satz Antennen und einen einem anderen der mindestens zwei Dienste zugewiesenen zweiten Satz Antennen umfassen.

26. System nach Anspruch 23 mit weiterhin einer Energieversorgung, die über das analoge Medium Energie erhält.

27. System nach Anspruch 23 mit weiterhin einem Modem (606) und einem Warnprozessor (608), zwischengeschaltet zwischen den Diplexer und den ersten und den zweiten Pfad, wobei der Warnprozessor eingerichtet ist, Signale zum Steuern von Abschwächern im ersten und zweiten Pfad auf Grund eines Telemetriesignals zu liefern.

28. Fernservereinheit nach Anspruch 1, wobei das analoge Kommunikationsmedium ein Koaxialkabel oder eine optische Faser ist.

29. Fernservereinheit nach Anspruch 1, die außerdem zum Aufwärts- oder Abwärtsfrequenzwandeln der analogen Signale eingerichtet ist.

30. System nach Anspruch 5, wobei das analoge Kommunikationsmedium ein Koaxialkabel oder eine optische Faser ist.

31. System nach Anspruch 5, das außerdem zum Aufwärts- oder Abwärtsfrequenzwandeln der analogen Signale eingerichtet ist.

32. Verfahren zur Kommunikation drahtloser Signale in einer im Wesentlichen geschlossenen Umgebung, umfassend:
Empfangen eines digitalisierten Spektrums für mehrere drahtlose Dienste in einem Multiplexformat bei einer Fernservereinheit,
Wandeln zwischen dem digitalisierten Spektrum und analogen Signalen für mehrere drahtlose Dienste bei der Fernservereinheit, und
Übertragen analoger Signale für die drahtlosen Dienste von der Fernservereinheit an mindestens eine von mehreren Ferneinheiten (112, 113, 114).

33. Verfahren nach Anspruch 32, wobei von der Fernservereinheit der mindestens einen Ferneinheit (112, 113, 114) Energie zur Verfügung gestellt wird.

34. Verfahren nach Anspruch 32, wobei das Übertragen der analogen Signale für den mindestens einen drahtlosen Dienst von der Fernservereinheit an die mindestens eine Ferneinheit (112, 113, 114) über ein Koaxialkabel oder eine optischer Faser erfolgt.

35. Verfahren nach Anspruch 32, wobei ein Aufwärts- oder Abwärtswandeln der analogen Signale stattfindet.

## Revendications

1. Unité de serveur distant (106), destinée à communiquer des signaux sans fil dans un environnement substantiellement fermé, comprenant :
un multiplexeur (406) couplé à un support de communication numérique qui transporte un spectre numérisé pour une pluralité de services sans fil sous un format multiplexé ;
**caractérisée par** :
une pluralité d'unités numériques distantes (402), couplées au multiplexeur, chacune des unités, dans la pluralité d'unités numériques distantes, étant configurée pour effectuer la conversion entre le spectre numérisé et des signaux analogiques pour la pluralité de services sans fil ; et
au moins un amplificateur bidirectionnel (410), destiné à amplifier sélectivement les signaux analogiques pour leur émission sur un support de communication analogique vers au moins une unité parmi une pluralité d'unités distantes (112, 113, 114).

2. Unité de serveur distant selon la revendication 1, comprenant en outre un circuit de puissance (420) conçu pour injecter de l'énergie électrique sur le support de communication analogique.

3. Unité de serveur distant selon la revendication 1, comprenant en outre un émetteur-récepteur de télémétrie (422) conçu pour injecter un signal de télémétrie sur le support de communication analogique en vue de son émission vers les unités distantes pour l'atténuation.

4. Unité de serveur distant selon la revendication 1, comprenant en outre un modem et un concentrateur d'alarmes, couplé entre le multiplexeur et ledit au moins un amplificateur bidirectionnel, afin de communiquer des messages d'alarme et autres.

5. Système de communication (100) destiné à communiquer des signaux sans fil dans un environnement substantiellement fermé et comprenant au moins une unité de serveur distant (106) selon la revendication 1, le système comprenant :
une unité d'hôtes maîtres (104, 200), conçue pour communiquer des signaux analogiques pour la pluralité de services sans fil avec une pluralité d'interfaces de fournisseur de service (102) et conçue pour envoyer et recevoir un spectre numérisé pour la pluralité de services sans fil sur une pluralité de liaisons de communication, l'unité d'hôtes maîtres comprenant des circuits (202-1 à 202-N) destinés à assurer la conversion entre les signaux analogiques et le spectre numérisé ;
dans lequel ladite au moins une unité de serveur distant (106 ; 108-1, 108-N) est couplée pour communiquer avec l'unité d'hôtes maîtres via le support de communication numérique (105), ladite au moins une unité de serveur distant étant en outre conçue pour communiquer avec l'unité d'hôtes maîtres en utilisant le spectre numérisé ; et
dans lequel chaque unité, dans la pluralité d'unités distantes (112, 114), est couplée pour communiquer avec une unité parmi ladite au moins une unité de serveur distant sur un support de communication analogique à l'aide des signaux analogiques, chacune des unités, dans la pluralité d'unités distantes, étant conçue pour émettre et recevoir des signaux sans fil pour la pluralité de services sans fil sur une pluralité d'interfaces radio pour des interfaces respectives associées de fournisseurs de services.

6. Système selon la revendication 5, dans lequel les circuits de l'unité d'hôtes maîtres destinés à convertir entre les signaux analogiques et le spectre numérisé comprennent une pluralité d'unités d'hôte (202), dont chacune est conçue pour fonctionner sur des signaux dans une bande de fréquences sélectionnée respective.

7. Système selon la revendication 6, dans lequel l'unité d'hôtes maîtres comprend un multiplexeur (206) couplé à chaque unité dans la pluralité d'unités d'hôtes.

8. Système selon la revendication 5, dans lequel l'unité d'hôtes maîtres comprend également une pluralité de modems (208) afin de communiquer des informations d'alarme entre l'unité d'hôtes maîtres et les unités distantes.

9. Système selon la revendication 5, dans lequel ladite au moins une unité de serveur distant est conçue pour injecter de l'énergie électrique pour la pluralité d'unités distantes.

10. Système selon la revendication 5, dans lequel ladite au moins une unité de serveur distant comprend un émetteur-récepteur de télémétrie (422) qui est conçu pour être utilisé par les unités distantes pour ajuster l'atténuation/le gain appliqué aux signaux dans différentes bandes de fréquence.

11. Système selon la revendication 10, dans lequel l'émetteur-récepteur de télémétrie communique sur une fréquence placée entre les bandes de fréquence d'au moins deux des signaux analogiques.

12. Système selon la revendication 5, comprenant en outre une unité d'expansion maîtresse (110) interposée entre l'unité d'hôtes maîtres et au moins deux unités de serveur distant.

13. Système selon la revendication 12, dans lequel l'unité d'expansion maîtresse comprend :
un multiplexeur (305) couplé à un support de communication qui transporte un spectre numérisé pour une pluralité de services sans fil sous un format multiplexé ;
une pluralité d'unités d'expansion numérique (302), couplées au multiplexeur, chacune des unités, dans la pluralité d'unités d'expansion numérique, étant configurée pour subdiviser numériquement des signaux descendants et pour additionner numériquement des signaux montants pour au moins une partie du spectre numérisé pour un service sur la pluralité de services ; et
une pluralité de circuits multiplexeurs (306), chaque circuit multiplexeur étant couplé à une sortie de chaque unité dans la pluralité d'unités d'expansion numérique afin de communiquer le spectre numérisé pour la pluralité de services, sous un format multiplexé, sur un support de communication numérique.

14. Système selon la revendication 13, dans lequel le multiplexeur et la pluralité de multiplexeurs comprennent chacun des multiplexeurs optiques.

15. Système selon la revendication 13, dans lequel l'unité d'expansion maîtresse comprend en outre un circuit (308, 209, 310) destiné à faire passer des messages d'alarme et autres.

16. Système selon la revendication 15, dans lequel le circuit destiné à faire passer des messages d'alarme et autres comprend :
un modem (309) couplé au circuit multiplexeur ;
une unité de commande d'alarmes (310) couplée au modem ; et
une pluralité de modems (308) couplés à l'unité de commande d'alarmes, l'unité de commande d'alarmes étant conçue pour faire passer des messages par le modem et la pluralité de modems.

17. Système selon la revendication 5, dans lequel le support de communication numérique comprend au moins un des suivants : câble optique, optique dans l'espace libre, liaison radio à ondes millimétriques, support sans fil et cuivre à vitesse élevée.

18. Système selon la revendication 5, dans lequel l'unité d'hôtes maîtres comprend :
une pluralité d'interfaces de fournisseurs de services (102, 204) ;
une pluralité d'unités d'hôte numérique (202), couplées sélectivement à la pluralité d'interfaces de fournisseurs de services, chaque unité d'hôte numérique étant affectée à la conversion entre le spectre analogique et le spectre numérisé ; et
une pluralité de multiplexeurs (206), chaque multiplexeur étant couplé à la pluralité d'unités d'hôte numérique et fournissant une interface avec un support de communication numérique (104).

19. Système selon la revendication 18, dans lequel la pluralité de multiplexeurs comprend une pluralité de multiplexeurs optiques ou électriques.

20. Système selon la revendication 18, dans lequel la pluralité d'unités d'hôte numérique comprend :
une unité d'hôte numérique couplée à une interface de fournisseur de service pour un premier service ; et
au moins deux autres unités d'hôte couplées par un diviseur/combinateur à une interface de fournisseur de service pour un second service.

21. Système selon la revendication 18, comprenant en outre un ou plusieurs diviseurs/combinateurs couplés sélectivement entre ladite au moins une interface de fournisseur de service parmi la pluralité d'interfaces de fournisseurs de services et la pluralité d'unités d'hôte numérique.

22. Système selon la revendication 18, comprenant en outre une banque de modems (208), chaque modem étant couplé à un circuit parmi la pluralité de circuits multiplexeurs afin de transporter des messages d'alarme et autres vers des unités distantes.

23. Système selon la revendication 5, dans lequel chaque unité distante comprend :
un diplexeur (610) couplé à un support analogique et destiné à recevoir les signaux analogiques pour au moins deux services ;
un premier trajet (612) couplé au diplexeur et traitant des signaux pour l'un desdits au moins deux services ;
un second trajet (614) couplé au diplexeur et traitant des signaux pour un autre desdits au moins deux services ; et
une pluralité d'antennes (638) couplées aux premier et second trajets afin de fournir l'interface radio à l'unité distante.

24. Système selon la revendication 23, dans lequel la pluralité d'antennes comprend un ensemble d'antennes (638) qui sont communes auxdits au moins deux services.

25. Système selon la revendication 23, dans lequel la pluralité d'antennes comprend un premier ensemble d'antennes attribué à un desdits au moins deux services et un second ensemble d'antennes attribué à un autre desdits au moins deux services.

26. Système selon la revendication 23, comprenant en outre une alimentation électrique qui reçoit de l'énergie électrique sur le support analogique.

27. Système selon la revendication 23, comprenant en outre un modem (606) et un processeur d'alarmes (608) couplés entre le diplexeur et le premier et le second trajets, le processeur d'alarme étant conçu pour fournir des signaux pour commander des atténuateurs sur le premier et le second trajet en fonction d'un signal de télémétrie.

28. Unité de serveur distant selon la revendication 1, dans laquelle le support de communication analogique est un câble coaxial ou une fibre optique.

29. Unité de serveur distant selon la revendication 1, dans laquelle l'unité de serveur distant est en outre conçue pour élever ou abaisser la fréquence des signaux analogiques.

30. Système selon la revendication 5, dans lequel le support de communication analogique est un câble coaxial ou une fibre optique.

31. Système selon la revendication 5, dans lequel le système est en outre conçu pour élever ou abaisser la fréquence des signaux analogiques.

32. Procédé de communication de signaux sans fil dans un environnement substantiellement fermé, le procédé comprenant les étapes consistant à :
recevoir un spectre numérisé pour une pluralité de services sans fil, sous un format multiplexé, sur une unité de serveur distant ;
effectuer la conversion entre le spectre numérisé et les signaux analogiques pour la pluralité de services sans fil, sur l'unité de serveur distant ; et
transporter des signaux analogiques pour la pluralité de services sans fil, entre l'unité de serveur distant et au moins une unité parmi la pluralité d'unités distantes (112, 113, 114).

33. Procédé selon la revendication 32, comprenant en outre l'étape consistant à fournir de l'énergie électrique entre l'unité de serveur distant et ladite au moins une unité parmi la pluralité d'unités distantes (112, 113, 114).

34. Procédé selon la revendication 32, dans lequel l'étape de transport des signaux analogiques pour la pluralité de services sans fil, entre l'unité de serveur distant et au moins une unité parmi la pluralité d'unités distantes (112, 113, 114), s'effectue sur un câble coaxial ou une fibre optique.

35. Procédé selon la revendication 32, comprenant en outre l'étape consistant à élever ou abaisser la fréquence des signaux analogiques.
